# EUROPÄISCHE PATENTSCHRIFT

(11) **EP 1 453 192 B1**
(45) Veröffentlichungstag und Bekanntmachung des Hinweises auf die Patenterteilung: **12.05.2010**
(21) Anmeldenummer: 03405138.3
(22) Anmeldetag: 28.02.2003
(51) Int. Cl.: H02M 7/48, H02M 7/5387, H02M 7/00

(54) **Kurzschlussstromgeschützte Umrichterschaltung**
Inverter circuit with short cicuit protection
Circuit convertisseur avec protection de courant de court circuit

(43) Veröffentlichungstag der Anmeldung: 01.09.2004
(73) Patentinhaber: ABB Schweiz AG, 5400 Baden (CH)
(72) Erfinder: Knapp, Gerold, 5408 Ennetbaden (CH); Mauron, Pascal, 3982 Überstorf (CH); Stemmler, Christoph, 5402 Baden (CH)
(74) Vertreter: ABB Patent Attorneys

(56) Entgegenhaltungen:
- JP-A- 6 311 730
- PATENT ABSTRACTS OF JAPAN Bd. 2000, Nr. 19, 5. Juni 2001 (2001-06-05) & JP 2001 057782 A (YASKAWA ELECTRIC CORP), 27. Februar 2001 (2001-02-27) & DATABASE WPI Derwent Publications Ltd., London, GB; AN 2001-270587
- KARSTEN RIES, HENRIK RASMUSSEN, PETER BJORNAA: "DETERMINATION OF ADDED INDUCTANCE BY FUSES IN DC-LINK INVERTER APPLICATIONS" DRIVES AND CONTROL, 13. Mai 2001 (2001-05-13), Seiten 1-9, XP002246386 LONDON

## Beschreibung

### Technisches Gebiet

Die Erfindung bezieht sich auf das Gebiet der Leistungselektronik. Sie geht aus von einer kurzschlussstromgeschützten Umrichterschaltung gemäss dem Oberbegriff des unabhängigen Anspruchs.

### Stand der Technik

Umrichterschaltungen werden heute in einer Fülle von leistungselektronischen Anwendungen, wie z.B. in der Antriebstechnik für Bahnanwendungen oder in statischen Umformeinrichtungen eingesetzt. Eine solche Umrichterschaltung ist gängigerweise gegen einen auftretenden Kurzschlussstrom geschützt, damit die Umrichterschaltung nicht beschädigt oder zerstört wird. Eine solche kurzschlussstromgeschützte Umrichterschaltung ist beispielsweise in "Determination of added inductance by fuses in DC-link inverter applications, Drive & Control 2001, 13-15 March, London" angegeben. Darin weist die Umrichterschaltung einen Gleichspannungskreis auf, der durch ein Gleichspannungskreisteilsystem gebildet ist, wobei das Gleichspannungskreisteilsystem einen ersten Energiespeicher aufweist. Das Gleichspannungskreisteilsystem weist weiterhin einen mit dem ersten Energiespeicher seriell verbundenen zweiten Energiespeicher und Sicherungen auf. Die beiden Energiespeicher sind jeweils als Kondensator ausgeführt, wobei jeder der Kondensatoren über eine seriell geschaltete Sicherung mit der Verschienung des Gleichspannungskreises verbunden ist. Weiterhin umfasst die Umrichterschaltung mindestens ein für jede Phase vorgesehenes und zu dem Gleichspannungskreis über die Verschienung parallel geschaltetes Zweigpaar, wobei jedes Zweigpaar Leistungshalbleiterschalter aufweist. Tritt nun ein Kurzschlussstrom in einem oder mehreren der ansteuerbaren Leistungshalbleiterschalter eines Zweigpaars auf, so entladen sich die beiden Kondensatoren sehr schnell, wobei der Kurzschlussstrom hauptsächlich über den oder die kurzgeschlossenen Leistungshalbleiterschalter des entsprechenden Zweigpaars fliesst. Die jeweils eine Sicherung an dem entsprechenden Kondensator dient nun dazu, diesen Kurzschlussstrom möglichst schnell durch Abtrennung des Gleichspannungskreisteilsystems und damit des Gleichspannungskreises selbst von dem hauptsächlich vom Kurzschlussstrom betroffenen Zweigpaar und den übrigen Zweigpaaren abzuhalten.

Problematisch bei einer kurzschlussstromgeschützten Umrichterschaltung nach "Determination of added inductance by fuses in DC-link inverter applications, Drive & Control 2001, 13-15 March, London" ist es, dass durch die beiden in Serie zu den Kondensatoren geschalteten Sicherungen und durch die Verbindung der beiden Kondensatoren ein hochinduktiver Aufbau des Gleichspannungskreises und damit der kurzschlussstromgeschützten Umrichterschaltung erreicht ist, da sich die parasitären Induktivitäten der beiden Sicherungen und der Verbindung der beiden Kondensatoren addieren. Diese parasitäre Gesamtinduktivität bildet mit den beiden Kondensatoren einen Oszillationspfad, welcher nur schwach gedämpft ist und bei jedem Schaltvorgang des entsprechenden Leistungshalbleiterschalters, insbesondere beim Abschalten neu zu Schwingungen angeregt wird. Die in der parasitären Gesamtinduktivität gespeicherte elektrische Energie bewirkt bei solchen Schwingungen eine Stromamplitude dieser Schwingungen, die in der Grössenordnung des abgeschalteten Stromes liegt. Die Dämpfung dieser Schwingungen und damit die Vernichtung der in der parasitären Gesamtinduktivität gespeicherten elektrischen Energie erfolgt ausschliesslich durch Fliessen des Stromes in ohmschen Widerstandsanteilen der beiden Kondensators des Gleichspannungskreises und der Verschienung. Dies führt zu höheren elektrischen und thermischen Belastungen dieser Komponenten bezüglich Verlustleistung. Darüber hinaus ist der Aufbau des Gleichspannungskreisteilsystems durch die beiden Sicherungen montage - und bauelementintensiv und verursacht somit erhebliche Kosten. Zudem benötigen die zwei für das Gleichspannungskreisteilsystem vorzusehenden Sicherungen viel Platz. Ein kompakter Aufbau einer kurzschlussstromgeschützten Umrichterschaltung, wie er beispielsweise für Traktionsanwendungen in elektrischen Bahnen gefordert ist, ist damit nicht oder nur sehr eingeschränkt möglich.

JP 2001 057782 zeigt eine Umrichterschaltung gemäss dem Oberbegriff des Anspruchs 1.

### Darstellung der Erfindung

Aufgabe der Erfindung ist es deshalb, eine kurzschlussstromgeschützte Umrichterschaltung anzugeben, welche niederinduktiv aufgebaut ist, unkompliziert und mit wenigen Bauelementen realisierbar ist und einen geringen Platzbedarf aufweist. Diese Aufgabe wird durch die Merkmale des Anspruchs 1 gelöst. In den abhängigen Ansprüchen sind vorteilhafte Weiterbildungen der Erfindung angegeben.

Die erfindungsgemässe kurzschlussstromgeschützte Umrichterschaltung umfasst einen Gleichspannungskreis, der durch ein Gleichspannungskreisteilsystem gebildet ist, wobei das Gleichspannungskreisteilsystem einen ersten Energiespeicher und einen mit dem ersten Energiespeicher seriell verbundenen zweiten Energiespeicher und eine Sicherung aufweist. Weiterhin umfasst die Umrichterschaltung mindestens ein für jede Phase vorgesehenes und zu dem Gleichspannungskreis parallel geschaltetes Zweigpaar, wobei jedes Zweigpaar Leistungshalbleiterschalter aufweist. Erfindungsgemäss bildet die Sicherung die Verbindung zwischen dem ersten Energiespeicher und dem zweiten Energiespeicher. Vorteilhaft kann dadurch ein niederinduktiver Aufbau des Gleichspannungskreises und damit der kurzschlussstromgeschützten Umrichterschaltung erreicht werden, da gegenüber einer kurzschlussstromgeschützten Umrichterschaltung nach dem Stand der Technik eine Sicherung eingespart und damit die parasitäre Gesamtinduktivität der Umrichterschaltung verringert werden kann. Weiterhin wird durch die vorteilhaft verringerte parasitäre Gesamtinduktivität bewirkt, dass eine durch das Schalten, insbesondere durch das Abschalten eines Leistungshalbleiterschalters eines Zweigpaars der Umrichterschaltung angeregte elektrische Schwingung zwischen der parasitären Gesamtinduktivität und den Energiespeichern des Gleichspannungskreises eine nur sehr kleine Amplitude, insbesondere Stromamplitude aufweist. Die elektrische und thermische Belastung der Komponenten der Umrichterschaltung kann somit vorteilhaft vermindert werden.

Desweiteren ist die Montage und der Aufbau der erfindungsgemässen kurzschlussstromgeschützten Umrichterschaltung aufgrund der nur einen verwendeten Sicherung für das Gleichspannungskreisteilsystem sehr einfach und bauelementextensiv, wodurch erheblich Kosten eingespart werden können. Ferner benötigt die erfindungsgemässe Umrichterschaltung nur ein Minimum an Platz und lässt sich somit vorteilhaft kompakt realisieren. Die erfindungsgemässe Umrichterschaltung eignet sich vorteilhaft für Anwendungen mit einphasiger Einspeisung und für Anwendungen mit grosser Energiespeicherkapazität.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen kurzschlussstromgeschützten Umrichterschaltung,
- Fig. 2: ein Ausschnitt der ersten Ausführungsform der erfindungsgemässen kurzschlussstromgeschützten Umrichterschaltung nach Fig. 1,
- Fig. 3: eine zweite Ausführungsform einer erfindungsgemässen kurzschlussstromgeschützten Umrichterschaltung,
- Fig. 4: ein Ausschnitt der zweiten Ausführungsform der erfindungsgemässen kurzschlussstromgeschützten Umrichterschaltung nach Fig. 3 und
- Fig. 5: eine dritte Ausführungsform einer erfindungsgemässen kurzschlussstromgeschützten Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

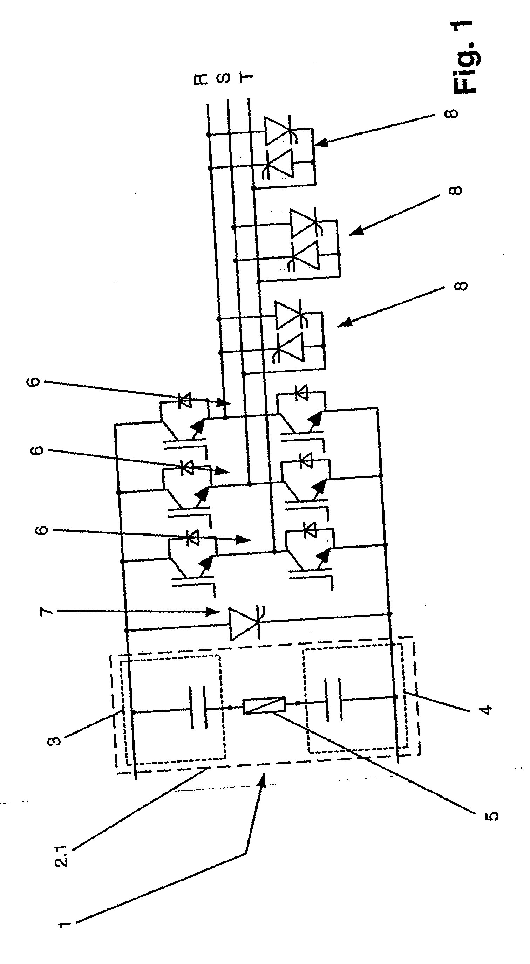

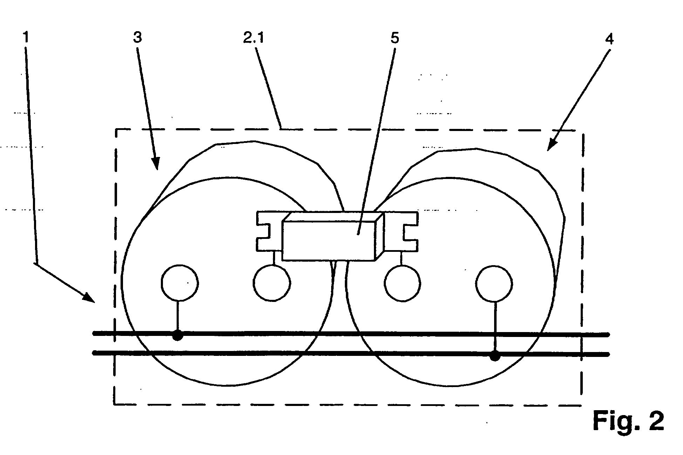

In Fig. 1 ist eine erste Ausführungsform einer erfindungsgemässen kurzschlussstromgeschützten Umrichterschaltung gezeigt. Weiterhin ist in Fig. 2 ein Ausschnitt der ersten Ausführungsform der erfindungsgemässen kurzschlussstromgeschützten Umrichterschaltung nach Fig. 1 dargestellt. Gemäss Fig. 1 umfasst die erfindungsgemässe Umrichterschaltung einen Gleichspannungskreis 1, der durch ein Gleichspannungskreisteilsystem 2.1 gebildet ist, wobei das Gleichspannungskreisteilsystem 2.1 einen ersten Energiespeicher 3 und einen mit dem ersten Energiespeicher 3 seriell verbundenen zweiten Energiespeicher 4 und eine Sicherung 5 aufweist. Desweiteren umfasst die Umrichterschaltung nach Fig. 1 mindestens ein für jede Phase R, S, T vorgesehenes und zu dem Gleichspannungskreis 1 parallel geschaltetes Zweigpaar 6, wobei jedes Zweigpaar 6 Leistungshalbleiterschalter aufweist, d.h. allgemein weist somit jedes Zweigpaar 6 eine beliebige Anzahl an Leistungshalbleiterschaltern auf, so dass auch Ausführungsformen mit nur einem einziger Leistungshalbleiterschalter für jedes Zweigpaar 6 denkbar sind. Die Verbindung zwischen jedem Zweigpaar 6 und dem Gleichspannungskreis 1 erfolgt über eine Verschienung des Gleichspannungskreises 1. Vorzugsweise ist jeder Leistungshalbleiterschalter als ansteuerbarer bidirektionaler Leistungshalbleiterschalter, insbesondere als Bipolartransistor mit isoliert angeordneter Ansteuerelektrode (IGBT) mit zusätzlich antiparallel geschalteter Diode ausgeführt. Selbstverständlich ist es auch denkbar, dass ein solcher vorstehend genannter ansteuerbarer bidirektionaler Leistungshalbleiterschalter beispielsweise als Abschaltthyristor, wie beispielweise GTO oder IGCT mit entsprechender Beschaltung, oder als Leistungs-MOSFET mit antiparallel geschalteter Diode ausgeführt sein kann.

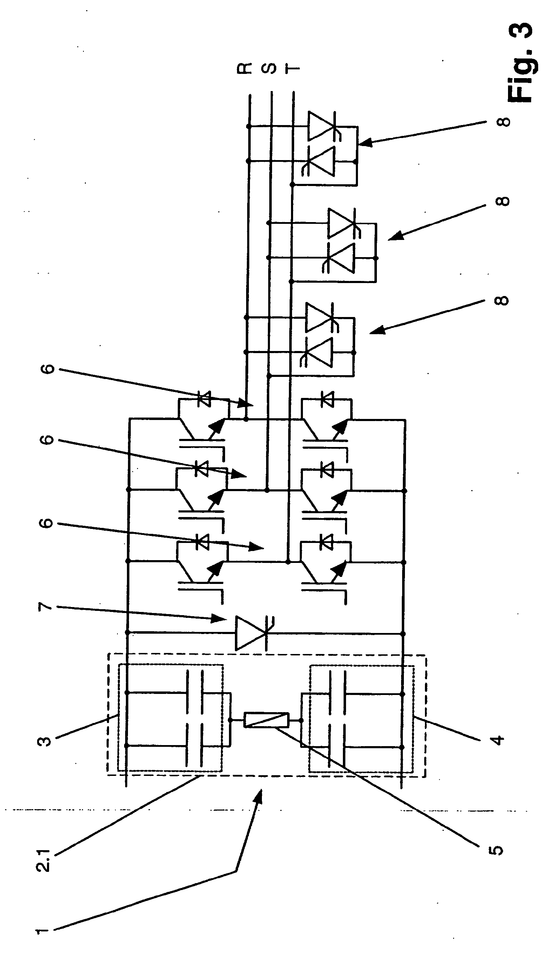

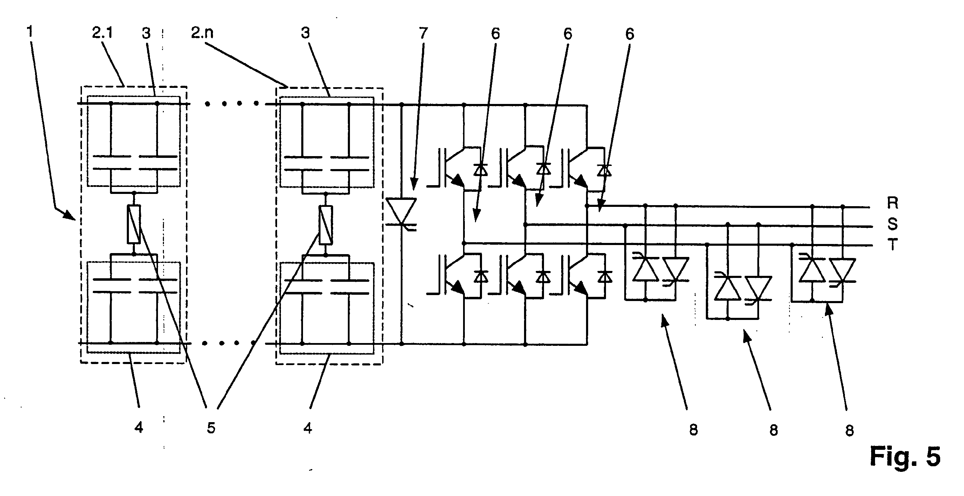

In den Ausführungsformen der erfindungsgemässen Umrichterschaltung gemäss Fig. 1 sowie in den nachfolgend beschriebenen Ausführungsformen gemäss Fig. 3 und Fig. 5 ist die erfindungsgemässe Umrichterschaltung beispielhaft jeweils dreiphasig ausgeführt. Allgemein kann die erfindungsgemässe Umrichterschaltung jedoch eine beliebige Anzahl Phasen aufweisen, wobei dann, wie bereits erwähnt, für jede Phase ein Zweigpaar 6 mit den entsprechenden Leistungshalbleiterschaltern vorgesehen ist.

Erfindungsgemäss bildet die Sicherung 5 die Verbindung zwischen dem ersten Energiespeicher 3 und dem zweiten Energiespeicher 4. Vorteilhaft ist dadurch ein niederinduktiver Aufbau des Gleichspannungskreises 1 und damit der kurzschlussstromgeschützten Umrichterschaltung erzielt, da gegenüber bekannten kurzschlussstromgeschützten Umrichterschaltungen eine Sicherung 5 eingespart und damit die parasitäre Gesamtinduktivität der Umrichterschaltung verringert werden kann. Gegenüber vielen Anordnungen von Sicherungen 5 in Umrichterschaltungen gemäss dem Stand der Technik, fliesst im Normalbetrieb aufgrund der Anordnung der Sicherung 5 in der erfindungsgemässen Umrichterschaltung nur ein verhältnismässig kleiner Strom über die Sicherung 5, so dass eine kostengünstige Sicherung 5 mit einem geringen Nennstrom ausgewählt werden kann. Zudem bewirkt die nun verringerte parasitäre Gesamtinduktivität, dass eine durch das Schalten, insbesondere durch das Abschalten eines Leistungshalbleiterschalters eines Zweigpaars 6 der Umrichterschaltung angeregte elektrische Schwingung zwischen der parasitären Gesamtinduktivität und den Energiespeichern 3, 4 des Gleichspannungskreises 1 eine nur sehr kleine Amplitude, insbesondere Stromamplitude aufweist. Die elektrische und thermische Belastung weiterer Komponenten der Umrichterschaltung kann somit vorteilhaft reduziert werden.

Bei einem auftretenden Kurzschlussstrom in einem oder mehreren der ansteuerbaren Leistungshalbleiterschalter eines Zweigpaars 6 entladen sich die beiden Energiespeicher 3, 4 sehr schnell, wobei der Kurzschlussstrom hauptsächlich über den oder die kurzgeschlossenen Leistungshalbleiterschalter des entsprechenden Zweigpaars 6 fliesst. Die Verbindung zwischen den beiden Energiespeichern 3, 4 bildende Sicherung 5 hat nun den Zweck, diesen Kurzschlussstrom möglichst schnell durch Abtrennung des Gleichspannungskreisteilsystems 2.1 zu unterbrechen und damit den Kurzschlussstrom von dem hauptsächlich betroffenen Zweigpaar 6 und den übrigen Zweigpaaren 6 abzuhalten. Die Sicherung 5 ist vorzugsweise als Schmelzsicherungen ausgeführt, da diese genügend schnell und zudem bauartbedingt niederinduktiv ist.

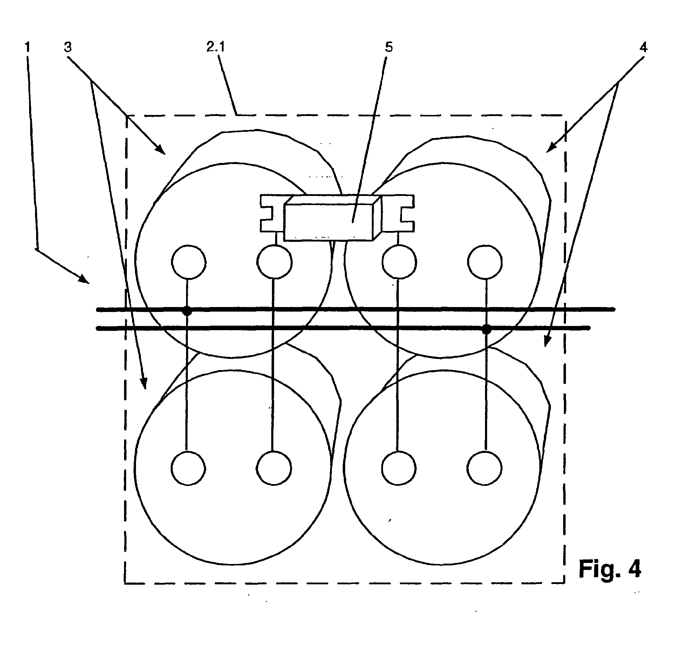

Gemäss Fig. 1 und Fig. 2 weist der erste Energiespeicher 3 des Gleichspannungskreisteilsystems 2.1 einen Kondensator und der zweite Energiespeicher 4 des Gleichspannungskreisteilsystems 2.1 einen Kondensator auf. In einer zweiten Ausführungsform einer erfindungsgemässen kurzschlussstromgeschützten Umrichterschaltung nach Fig. 3 und in einem Ausschnitt nach Fig. 4 der zweite Ausführungsform der erfindungsgemässen kurzschlussstromgeschützten Umrichterschaltung nach Fig. 3 weist der erste Energiespeicher 3 des Gleichspannungskreisteilsystems 2.1 zwei Kondensatoren und der zweite Energiespeicher 4 des Gleichspannungskreisteilsystems 2.1 ebenfalls zwei Kondensatoren auf. Allgemein ist es somit denkbar, dass der erste Energiespeicher 3 des Gleichspannungskreisteilsystems 2.1 mindestens einen Kondensator aufweist und der zweite Energiespeicher 4 des Gleichspannungskreisteilsystems 2.1 ebenfalls mindestens einen Kondensator aufweist. Gemäss Fig. 3 und Fig. 4 sind bei einem mehrere Kondensatoren aufweisenden ersten Energiespeicher 3 des Gleichspannungskreisteilsystems 2.1 die Kondensatoren parallel geschaltet. Weiterhin sind gemäss Fig. 3 und Fig. 4 bei einem mehrere Kondensatoren aufweisenden zweiten Energiespeicher 4 des Gleichspannungskreisteilsystems 2.1 die Kondensatoren auch parallel geschaltet. Die vorstehend angegebene Parallelschaltung der Kondensatoren bewirkt vorteilhaft eine Kapazitätserhöhung des Gleichspannungskreisteilsystems 2.1 und damit des Gleichspannungskreises 1 selbst. Es ist aber alternativ ebenso denkbar, dass bei einem mehrere Kondensatoren aufweisenden ersten Energiespeicher 3 die Kondensatoren in Serie geschaltet sind und bei einem mehrere Kondensatoren aufweisenden zweiten Energiespeicher 4 die Kondensatoren ebenfalls in Serie geschaltet sind. Durch die vorstehend angegebene Serienschaltung der Kondensatoren kann vorteilhaft eine Spannungserhöhung des Gleichspannungskreisteilsystems 2.1 und damit des Gleichspannungskreises 1 selbst erreicht werden, da sich die Gesamtspannung des Gleichspannungskreisteilsystems 2.1 als Addition der einzelnen an jedem Kondensator anliegenden Spannungen ergibt.

Gemäss Fig. 1 und Fig. 3 sind jeweils zwei Phasen R, S, T über ein weiteres ansteuerbares Kurzschlusselement 8 miteinander verbunden. Die Verbindung zwischen den jeweiligen Phasen R, S, T ist dabei niederimpedant, d.h. mit einer nur sehr kleinen seriellen Impedanz ausgeführt. Dieses weitere ansteuerbare Kurzschlusselement 8 dient bei einem Kurzschluss an einer oder mehreren Phasen R;S;T dazu, dass ein durch den Kurzschluss bedingter Kurzschlussstrom aus den Phasen R, S, T, d.h. beispielsweise aus einem elektrischen Versorgungsnetz, nicht oder nur mit einer kleinen Amplitude über die Leistungshalbleiterschalter der entsprechenden Zweigpaare 6, insbesondere bei entsprechend ausgeführten Leistungshalbleiterschalteren über die antiparallel geschalteten Dioden fliesst, damit die Leistungshalbleiterschalter nicht weiter oder überhaupt nicht beschädigt oder zerstört werden. Das weitere Kurzschlusselement 8 wird dann angesteuert, wenn in oder an einem Zweigpaar 6 mittels einer Detektionseinrichtung ein Kurzschlussstrom detektiert wird, wobei das weitere ansteuerbare Kurzschlusselement 8 dann die beiden jeweils mit dem weiteren Kurzschlusselement 8 verbundenen Phasen R, S, T kurzschliesst. Für eine dreiphasig ausgeführte erfindungsgemässe Umrichterschaltung ist es auch denkbar, dass bei nur zwei Phasen R, S, T jeweils ein weiteres Kurzschlusselement 8 vorgesehen ist. Mit Vorteil ist ein solches weiteres ansteuerbares Kurzschlusselement 8 aus zwei antiparallel geschalteten ansteuerbaren Leistungshalbleitern mit jeweiliger Druckkontaktierung, wie beispielsweise Scheibenthyristoren oder GTOs, gebildet. Das weitere ansteuerbare Kurzschlusselement 8 kann aber auch als Triac ausgebildet sein.

Gemäss Fig. 1 und Fig. 3 weist die erfindungsgemässe Umrichterschaltung mindestens ein ansteuerbares Kurzschlusselement 7 auf, das parallel zu dem Gleichspannungskreisteilsystem 2.1 geschaltet ist. Dieses ansteuerbare Kurzschlusselement 7 dient bei einem Kurzschluss in einem oder mehreren der ansteuerbaren Leistungshalbleiterschalter eines Zweigpaars 6 dazu, dass ein durch den Kurzschluss bedingter Kurzschlussstrom aus den Energiespeichern 3, 4 oder aus den Phasen R, S, T, d.h. beispielsweise aus einem elektrischen Versorgungsnetz, nur sehr kurz über den oder die kurzschlussbehafteten Leistungshalbleiterschalter des entsprechenden Zweigpaars 6 fliesst und dann über das Kurzschlusselement 7 gelenkt wird, damit das oder die kurzschlussbehafteten Leistungshalbleiterschalter nicht weiter beschädigt oder zerstört werden. Das Kurzschlusselement 7 wird dann angesteuert, wenn in oder an einem Zweigpaar 6 mittels der Detektionseinrichtung ein Kurzschlussstrom detektiert wird, wobei das ansteuerbare Kurzschlusselement 7 dann durch entsprechendes Schalten den Gleichspannungskreis 1 kurzschliesst. Bei Ansteuerung des Kurzschlusselementes 7 werden die antiparallel geschalteten Dioden bei entsprechend ausgeführten Leistungshalbleiterschaltern mit dem Kurzschlussstrom beaufschlagt, wenn beispielsweise keine weiteren Kurzschlusselemente 8 vorgesehen sind. Mit Vorteil ist ein solches ansteuerbares Kurzschlusselement 7 als ansteuerbarer Leistungshalbleiter mit Druckkontaktierung, wie beispielsweise ein Scheibenthyristor oder ein GTO, ausgebildet. Dieses derart ausgebildete ansteuerbare Kurzschlusselement 7 ist vorzugsweise direkt an der Verbindung eines Zweigpaars 6 und der Verschienung zum Gleichspannungskreis 1 angeordnet, wodurch weiter Platz eingespart werden kann und ein niederinduktiver Aufbau der erfindungsgemässen Umrichterschaltung erreicht werden kann. Zur Erhöhung der Stromführbarkeit im Falle des vorstehend detailliert beschriebenen Kurzschliessens des Gleichspannungskreisteilsystems 2.1 und damit des Gleichspannungskreises 1 können auch mehrere parallel zu dem Gleichspannungskreisteilsystem 2.1 geschaltete ansteuerbare Kurzschlusselemente 7 vorgesehen sein. Ein weiterer Vorteil des Kurzschlusselementes 7 besteht darin, dass die beiden Energiespeicher 3, 4 des Gleichspannungskreisteilsystems 2.1 bei einem auftretenden Kurzschluss durch das Schalten des Kurzschlusselementes 7 frühzeitig entladen werden und damit die Sicherung 5 schneller ansprechen kann. Durch das frühzeitige Ansprechen der Sicherung 5 kann das hauptsächlich vom Kurzschluss betroffene Zweigpaar 6 und die übrigen Zweigpaare 6 in verbesserter Weise vor weiterer Beschädigung oder Zerstörung geschützt werden.

In Fig. 5 ist eine dritte Ausführungsform einer erfindungsgemässen kurzschlussstromgeschützten Umrichterschaltung gezeigt. Die Umrichterschaltung nach Fig. 5 unterscheidet sich von den in Fig. 1 und Fig. 3 dargestellten und vorstehend detailliert beschriebenen Ausführungsformen der Umrichterschaltung darin, dass der Gleichspannungskreis 1 mindestens ein weiteres Gleichspannungskreisteilsystem 2.2, ..., 2.n des bisherigen Gleichspannungskreisteilsystems 2.1 aufweist, wobei die Gleichspannungskreissteilsysteme 2.1, ..., 2.n zueinander parallel geschaltet sind. Entsprechend Fig. 3 kann gemäss Fig. 5 jedes Gleichspannungskreisteilsystem 2.1, ..., 2.n bezüglich des zugehörigen ersten Energiespeichers 3 mehrere Kondensatoren und bezüglich des zugehörigen zweiten Energiespeichers 4 mehrere Kondensatoren aufweisen. Entsprechend Fig. 3 sind dann gemäss Fig. 5 die Kondensatoren des ersten und zweiten Energiespeichers 3, 4 eines jeden Gleichspannungskreissteilsystems 2.1, ..., 2.n vorzugsweise jeweils parallel geschaltet. Wie schon bei der Beschreibung der zweiten Ausführungsform der erfindungsgemässen Umrichterschaltung nach Fig. 3 erwähnt, bewirkt die Parallelschaltung der Kondensatoren vorteilhaft eine Kapazitätserhöhung des jeweiligen Gleichspannungskreisteilsystems 2.1, ..., 2.n und damit des Gleichspannungskreises 1 selbst. Es ist aber alternativ ebenso denkbar, wie auch bei der Beschreibung der zweiten Ausführungsform der erfindungsgemässen Umrichterschaltung nach Fig. 3 entsprechend schon erwähnt, dass die Kondensatoren des ersten und zweiten Energiespeichers 3, 4 eines jeden Gleichspannungskreissteilsystems 2.1, ..., 2.n jeweils in Serie geschaltet sind. Durch diese Serienschaltung der Kondensatoren kann vorteilhaft eine Spannungserhöhung des jeweiligen Gleichspannungskreisteilsystems 2.1, ..., 2.n und damit des Gleichspannungskreises 1 selbst erreicht werden. Es versteht sich, dass der erste Energiespeicher 3 und der zweite Energiespeicher eines jeden Gleichspannungskreisteilsystems 2.1, ..., 2.n auch jeweils nur einen Kondensator aufweisen kann. Bei der Ausführungsform der Umrichterschaltung gemäss Fig. 5 ist entsprechend Fig. 1 und Fig. 3 ein ansteuerbares Kurzschlusselement 7 und für jeweils zwei Phasen R, S, T ein weiteres ansteuerbares Kurzschlusselement 8 vorgesehen, wobei auf die detaillierte Beschreibung bei Fig. 1 und Fig. 3 der ansteuerbaren Kurzschlusselemente 7, 8 mit den dabei angegebenen Vorteilen verwiesen wird. Selbstverständlich ist bei der Ausführungsform der erfindungsgemässen Umrichterschaltung nach Fig. 5 entsprechend Fig. 1 bis Fig. 4 für jedes Gleichspannungskreisteilsystem 2.1, ..., 2.n eine Sicherung 5 vorgesehen, die Verbindung zwischen dem ersten Energiespeicher 3 des zugehörigen Gleichspannungskreisteilsystems 2.1, ..., 2.n und dem zweiten Energiespeicher 4 desselben Gleichspannungskreisteilsystems 2.1, ..., 2.n bildet.

Der Vorteil, neben dem bisherigen Gleichspannungskreissteilsystem 2.1 weitere parallelgeschaltete Gleichspannungskreissteilsysteme 2.2, ..., 2.n vorzusehen, besteht darin, dass sich die parasitäre Gesamtinduktivität durch die Parallelschaltung der Gleichspannungskreisteilsysteme 2.1, ..., 2.n weiter reduzieren lässt. Dies bewirkt vorteilhaft, dass die eingangs erwähnte elektrische Schwingung zwischen der parasitären Gesamtinduktivität und sämtlichen ersten und zweiten Energiespeichern 3, 4 des Gleichspannungskreises 1 amplitudenmässig weiter verringert werden kann. Die elektrische und thermische Belastung weiterer Komponenten der Umrichterschaltung kann somit vorteilhaft auf ein Minimum reduziert werden.

Ein weiterer Vorteil ist, dass bei einem Kurzschluss innerhalb eines der Gleichspannungskreisteilsysteme 2.1, ..., 2.n nur das vom Kurzschluss betroffenen Gleichspannungskreisteilsystem 2.1, ..., 2.n durch die zugehörige Sicherung 5 vom übrigen-Gleichspannungskreis 1 abgetrennt wird. Durch diese redundanten Gleichspannungskreisteilsysteme 2.1, ..., 2.n ist somit vorteilhaft ein hohes Mass an Selektivität erreichbar, so dass die erfindungsgemässe Umrichterschaltung mit den restlichen, nicht vom Kurzschluss betroffenen Gleichspannungskreisteilsystemen 2.1, ..., 2.n nahezu uneingeschränkt weiterbetrieben werden kann. Gerade bei Einsatz der erfindungsgemässen kurzschlussstromgeschützten Umrichterschaltung beispielsweise für Traktionsanwendungen in elektrischen Bahnen ist ein solcher Weiterbetrieb der Umrichterschaltung unerlässlich.

Die erfindungsgemässe kurzschlussstromgeschützte Umrichterschaltung zeichnet sich insgesamt durch einen montagefreundlichen, einfachen und damit kostengünstigen Aufbau aus, kommt mit einer Minimalanzahl an Bauelementen aus und ist weiterhin platzsparend und somit kompakt realisierbar.

### Bezugszeichenliste

- 1: Gleichspannungskreis
- 2.1,..., 2.n: Gleichspannungskreisteilsystem
- 3: erster Energiespeicher
- 4: zweiter Energiespeicher
- 5: Sicherung
- 6: Zweigpaar
- 7: ansteuerbares Kurzschlusselement
- 8: weiteres ansteuerbares Kurzschlusselement

## Patentansprüche

1. Kurzschlussstromgeschützte Umrichterschaltung mit einem Gleichspannungskreis (1), welcher Gleichspannungskreis (1) durch ein Gleichspannungskreisteilsystem (2.1) gebildet ist, wobei das Gleichspannungskreisteilsystem (2.1) einen ersten Energiespeicher (3) und einen mit dem ersten Energiespeicher (3) seriell verbundenen zweiten Energiespeicher (4) und eine Sicherung (5) aufweist,
mit mindestens einem für jede Phase (R, S, T) vorgesehenen und zu dem Gleichspannungskreis (1) parallel geschalteten Zweigpaar (6), wobei jedes Zweigpaar (6) Leistungshalbleiterschalter aufweist, wobei die Sicherung (5) die Verbindung zwischen dem ersten Energiespeicher (3) und dem zweiten Energiespeicher (4) bildet,
**dadurch gekennzeichnet,**
**dass** mindestens ein ansteuerbares Kurzschlusselement (7) parallel zu dem Gleichspannungskreisteilsystem (2.1) geschaltet ist und das Kurzschlusselement (7) dann angesteuert wird, wenn in oder an einem Zweigpaar (6) mittels einer Detektionseinrichtung ein Kurzschlussstrom detektiert wird, wobei das Kurzschlusselement (7) durch entsprechendes Schalten den Gleichspannungskreis (1) kurzschliesst.

2. Umrichterschaltung nach Anspruch 1, **dadurch gekennzeichnet, dass** der erste Energiespeicher (3) mindestens einen Kondensator aufweist, und
dass der zweite Energiespeicher (4) mindestens einen Kondensator aufweist.

3. Umrichterschaltung nach Anspruch 2, **dadurch gekennzeichnet, dass** bei einem mehrere Kondensatoren aufweisenden ersten Energiespeicher (3) die Kondensatoren parallel geschaltet sind, und
dass bei einem mehrere Kondensatoren aufweisenden zweiten Energiespeicher (4) die Kondensatoren parallel geschaltet sind.

4. Umrichterschaltung nach Anspruch 2, **dadurch gekennzeichnet, dass** bei einem mehrere Kondensatoren aufweisenden ersten Energiespeicher (3) die Kondensatoren in Serie geschaltet sind, und
dass bei einem mehrere Kondensatoren aufweisenden zweiten Energiespeicher (4) die Kondensatoren in Serie geschaltet sind.

5. Umrichterschaltung nach einem der vorhergehenden Ansprüche, **dadurch gekennzeichnet, dass** jeweils zwei Phasen (R, S, T) über ein weiteres ansteuerbares Kurzschlusselement (8) miteinander verbunden sind.

6. Umrichterschaltung nach Anspruch 5, **dadurch gekennzeichnet, dass** das weitere ansteuerbare Kurzschlusselement (8) aus zwei antiparallel geschalteten ansteuerbaren Leistungshalbleitern mit jeweiliger Druckkontaktierung gebildet ist.

7. Umrichterschaltung nach einem der vorhergehenden Ansprüche, **dadurch gekennzeichnet, dass** das Kurzschlusselement (7) als ansteuerbarer Leistungshalbleiter mit Druckkontaktierung ausgebildet ist.

8. Umrichterschaltung nach einem der vorhergehenden Ansprüche, **dadurch gekennzeichnet, dass** der Gleichspannungskreis (1) mindestens ein weiteres Gleichspannungskreisteilsystem (2.2, ..., 2.n) des Gleichspannungskreisteilsystems (2.1) aufweist, wobei die Gleichspannungskreissteilsysteme (2.1, ..., 2.n) zueinander parallel geschaltet sind.

## Claims

1. Converter circuit with short-circuit current protection having a DC voltage circuit (1), which DC voltage circuit (1) is formed by a DC voltage circuit subsystem (2.1), the DC voltage circuit subsystem (2.1) having a first energy store (3) and a second energy store (4), which is connected in series with the first energy store (3), and a fuse (5), having at least one pair of branches (6) provided for each phase (R, Y, B) and connected in parallel with the DC voltage circuit (1), each pair of branches (6) having power semiconductor switches, the fuse (5) forming the connection between the first energy store (3) and the second energy store (4), **characterized in that** at least one drivable short-circuit element (7) is connected in parallel with the DC voltage circuit subsystem (2.1) and the short-circuit element (7) is driven when a short-circuit current is detected in or at a pair of branches (6) by means of a detection device, the short-circuit element (7) short-circuiting the DC voltage circuit (1) by corresponding switching.

2. Converter circuit according to Claim 1, **characterized in that** the first energy store (3) has at least one capacitor, and **in that** the second energy store (4) has at least one capacitor.

3. Converter circuit according to Claim 2, **characterized in that**, in the case of a first energy store (3) having two or more capacitors, the capacitors are connected in parallel, and **in that**, in the case of a second energy store (4) having two or more capacitors, the capacitors are connected in parallel.

4. Converter circuit according to Claim 2, **characterized in that**, in the case of a first energy store (3) having two or more capacitors, the capacitors are connected in series, and **in that**, in the case of a second energy store (4) having two or more capacitors, the capacitors are connected in series.

5. Converter circuit according to one of the preceding claims, **characterized in that** in each case two phases (R, Y, B) are connected to one another via a further drivable short-circuit element (8).

6. Converter circuit according to Claim 5, **characterized in that** the further drivable short-circuit element (8) is formed from two drivable power semiconductor switches connected back-to-back in parallel and each having pressure contact.

7. Converter circuit according to one of the preceding claims, **characterized in that** the short-circuit element (7) is in the form of a drivable power semiconductor having pressure contact.

8. Converter circuit according to one of the preceding claims, **characterized in that** the DC voltage circuit (1) has at least one further DC voltage circuit subsystem (2.2, ..., 2.n) of the DC voltage circuit subsystem (2.1), the DC voltage circuit subsystems (2.1, ..., 2.n) being connected in parallel with one another.

## Revendications

1. Circuit convertisseur protégé contre les courts-circuits de courant et présentant
un circuit (1) sous tension continue, lequel circuit (1) sous tension continue est formé d'un système partiel (2.1) de circuit sous tension continue, le système partiel (2.1) de circuit sous tension continue présentant un premier accumulateur d'énergie (3), un deuxième accumulateur d'énergie (4) raccordé en série au premier accumulateur d'énergie (3) et une protection (5),
pour chaque phase (R, S, T), au moins une paire de dérivations (6) raccordée en parallèle au circuit (1) sous tension continue, chaque paire de dérivations (6) présentant un commutateur semi-conducteur de puissance, la protection (5) assurant la liaison entre le premier accumulateur d'énergie (3) et le deuxième accumulateur d'énergie (4),
**caractérisé en ce que**
au moins un élément asservi de court-circuit (7) est raccordé en parallèle au système partiel (2.1) de circuit sous tension continue,
**en ce que** l'élément de court-circuit (7) est activé lorsqu'un courant de court-circuit est détecté dans ou sur une paire de dérivations (6) au moyen d'un dispositif de détection et
**en ce que** l'élément de court-circuit (7) met le circuit (1) sous tension continue en court-circuit par commutation appropriée.

2. Circuit convertisseur selon la revendication 1, **caractérisé en ce que** le premier accumulateur d'énergie (3) présente au moins un condensateur et **en ce que** le deuxième accumulateur d'énergie (4) présente au moins un condensateur.

3. Circuit convertisseur selon la revendication 2, **caractérisé en ce que** lorsque le premier accumulateur d'énergie (3) présente plusieurs condensateurs, les condensateurs sont raccordés en parallèle et **en ce que** lorsque le deuxième accumulateur d'énergie (4) présente plusieurs condensateurs, les condensateurs sont raccordés en parallèle.

4. Circuit convertisseur selon la revendication 2, **caractérisé en ce que** lorsque le premier accumulateur d'énergie (3) présente plusieurs condensateurs, les condensateurs sont raccordés en série et **en ce que** lorsque le deuxième accumulateur d'énergie (4) présente plusieurs condensateurs, les condensateurs sont raccordés en série.

5. Circuit convertisseur selon l'une des revendications précédentes, **caractérisé en ce que** les phases (R, S, T) sont raccordées deux à deux par un autre élément de court-circuit (8) asservi.

6. Circuit convertisseur selon la revendication 5, **caractérisé en ce que** l'autre élément de court-circuit (8) asservi est formé de deux semi-conducteurs de puissance asservis raccordés en antiparallèle et présentant chacun un contact par poussoir.

7. Circuit convertisseur selon l'une des revendications précédentes, **caractérisé en ce que** l'élément de court-circuit (7) est configuré comme semi-conducteur de puissance asservi à contact par poussoir.

8. Circuit convertisseur selon l'une des revendications précédentes, **caractérisé en ce que** le circuit (1) sous tension continue présente au moins un autre système partiel (2.2, ..., 2.n) de circuit sous tension continue du circuit partiel (2.1) de circuit sous tension continue, les systèmes (2.1, ..., 2.n) partiels de circuit sous tension continue étant raccordés les uns aux autres en parallèle.
